# EUROPEAN PATENT SPECIFICATION

(11) **EP 2 775 825 B1**
(45) Date of publication and mention of the grant of the patent: **15.08.2018**
(21) Application number: 12783342.4
(22) Date of filing: 13.09.2012
(51) Int. Cl.: A01J 5/007

(54) **METHOD FOR MONITORING A MILKING PROCESS, AND ROBOTIC AUTOMATIC MILKING IMPLEMENT**
VERFAHREN ZUR ÜBERWACHUNG EINES MELKVORGANGS, UND ROBOTISCHES AUTOMATISCHES MELKGERÄT
PROCÉDÉ POUR CONTRÔLER UN PROCESSUS DE TRAITE, ET DISPOSITIF DE TRAITE AUTOMATIQUE ROBOTISEE

(30) Priority: 07.11.2011 NL 2007732
(43) Date of publication of application: 17.09.2014
(73) Proprietor: Lely Patent N.V., 3147 PB Maassluis (NL)
(72) Inventor: WILSON, Allan, Walter, NL-3147 PA Maassluis (NL)
(74) Representative: Octrooibureau Van der Lely N.V.
(86) International application number: PCT/NL2012/050640
(87) International publication number: WO 2013/070062

(56) References cited:
- EP-A1- 0 091 087
- EP-A1- 1 245 150
- EP-A2- 0 953 829

## Description

### TECHNICAL FIELD

The present invention relates to a method of monitoring a milking process, and to a robotic automatic milking implement. More particularly the present invention relates to monitoring a milking process by measuring at least one property of a vibrational signal within an airline.

### BACKGROUND ART

In any milking system, it is important to ensure that teatcups are properly connected to the teats of animals being milked. Improper connection may result in inefficient milking - if any milk at all may be extracted - and cause damage to the udder. If a teatcup becomes completely disconnected, there is also a risk that extraneous material within the milking environment will be sucked into the milk delivery system, which is highly undesirable.

The ability to detect these problems is especially important in an automated milking system, such as those controlled by a robot, where operators are not always present to observe an improper connection and readjust the teatcup.

One method for doing so measures sound within the milking line and compares these measurements with predetermined reference values to determine whether present conditions within the line indicate that the teatcup is correctly connected to the teat. Document EP-0953829A provides an example of one such method based on this principle.

Such methods suffer limitations due to the nature of the environment within the milking line. In particular, the passage of liquid within the line creates significant levels of interference which makes obtaining consistent and accurate measurements difficult. Connection of the milking line to other elements within the milking plant also introduces other sources of noise.

Furthermore, such methods require placement of the sensor for measuring sound within the milking line between the teatcups and milk receiver. The environment surrounding the teatcups is harsh, for example due to exposure to liquid (including cleaning chemicals), impact, and variation in temperature. Positioning of the sensor at this point is also not conducive to the generally desirable objective of minimising bulk and weight to the milking implement.

It is an object of the present invention to address the foregoing problems or at least to provide the public with a useful choice.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention there is provided a method according to claim 1 of monitoring a milking process, the milking process performed by a milking apparatus including at least one teatcup with a pulsation space and at least one pulsation airline configured to deliver varying levels of pressure to the pulsation space, the method characterised by the steps of:
measuring at least one property of a vibrational signal within the airline with a vibration sensor;
comparing a value of the measured property with a reference value;
determining a condition of the milking process based on the comparison; and
adjusting the positioning of the teatcup in response to the determined condition.

According to another aspect but not according to the present invention there is provided a control device for monitoring a milking process, the milking process performed by a milking apparatus including at least one teatcup with a pulsation space and at least one pulsation airline configured to deliver varying levels of pressure to the pulsation space, the device including:
a vibration sensor configured to measure at least one property of vibrations within the airline; and
at least one processor configured to:
   compare a value of the measured property with a reference value; and
   determine a condition of the milking process based on the comparison.

According to another aspect of the present invention there is provided a robotic automatic milking implement according to claim 13 configured to perform a milking process, the implement including:
at least one teatcup configured to receive a teat of a milking animal, wherein the teatcup includes a pulsation space;
at least one airline configured to deliver varying levels of pressure to the pulsation space of the teatcup;
a robot arm configured to connect the teatcup to the teat; and
a vibration sensor configured to measure at least one property of vibrations within the airline; and
at least one processor configured to:
   compare a value of the measured property with a reference value;
   determine a condition of the milking process based on the comparison; and
   adjust the positioning of the teatcup in response to the determined condition.

It is envisaged that the vibrational signal may be an acoustic signal within the airline.

The airline may provide a much cleaner source of sound within the teatcup than the milking line. Variation in noise levels, particularly during certain phases of the pulsation cycle, may be attributed to variation in airflow through the teatcup with a greater level of confidence than in previously known systems.

It is envisaged that the pulsation space may be the space between a teatcup shell and teatcup liner, as known in the art. The pulsation space may also act as a "sounding" diaphragm in order to provide a large signal to noise ratio within the airline.

By measuring vibrations in the airline the sensor may also be positioned away from the point of milk extraction, minimising sensor requirements with regard to withstanding environmental effects and reducing clutter. Furthermore, activity within the airline is not as constrained by hygiene regulations as the milking line.
In a preferred embodiment the condition is one of the teatcup being disconnected from a teat of the milking animal, or the teatcup being incorrectly fitted to a teat of a milking animal.

It should be appreciated that determining the condition may be achieved in a number of ways.
Preferably determining the condition includes comparing an amplitude of the measured property with the reference value.

However, in another embodiment determining the condition may include comparing deviation of the value of the measured property over time with the reference value.

Alternatively, determining the condition may include comparing the rate of change of the measured property over time with the reference value.

The varying levels of pressure delivered to the pulsation space are commonly known as a pulsation cycle in which the pulsation space is alternately exposed to atmospheric pressure and a negative pressure commonly referred to as "vacuum". Within this cycle, there are a number of phases characterised by the level of pressure and direction of airflow. It is envisaged that in a preferred embodiment the invention includes determining a phase of one of the milking process or a pulsation phase.

It is envisaged that the phase may be determined by comparing the value of the measured property with a predetermined threshold.

Alternatively, or in combination with other methods, the phase may be determined using a signal associated with a pulsator configured to control the level of pressure within the airline.

Preferably the property may be measured during at least one selected phase.

Specifically, it is envisaged that the property may be measured during a phase in which the airline is exposed to atmosphere.

Further, the expected characteristics of the vibrational signal may vary between phases. As such, the phase in which the property is measured may be used to determine the reference value to be used in the comparison.
In a preferred embodiment the vibration sensor is at least one of a piezoelectric transducer and a microphone.

Preferably, the property of the vibrational signal is an average sound pressure level or a peak sound pressure level. In particular, it is envisaged that this may be measured during a resting phase and/or a milking phase of a pulsation cycle of the milking process. The inventor has determined that measurement of sound properties provides a avenue for checking the quality of the teatcup attachment.

It should be appreciated that this is not intended to be limiting, and that any suitable means of measuring properties of vibrational signals known to a person skilled in the art may be used to implement the present invention. According to the invention, the positioning of the teatcup is adjusted in response to the determined condition.
For example, if the present invention is implemented in a robotic milking machine and it is determined that the teatcup has fallen off, the teatcup applicator of the robot may is controlled to reapply the teatcup. Similarly, if it has been determined that the teatcup is incorrectly fitted to a teat, such a teatcup applicator is controlled to reapply the teatcup.

In an embodiment of the present invention, an alarm may be issued in response to the determined condition. This may be by way of an alarm device such as a siren or light in order to alert an operator that action needs to be taken - particularly in milking systems without automated means for applying the teatcups. Alternatively (or additionally), the alarm may be a virtual notification or record within software monitoring or managing the milking process.

For a firmware and/or software (also known as a computer program) implementation, the techniques of the present invention may be implemented as instructions (for example, procedures, functions, and so on) that perform the functions described. It should be appreciated that the present invention is not described with reference to any particular programming languages, and that a variety of programming languages could be used to implement the present invention. The firmware and/or software codes may be stored in a memory, or embodied in any other processor readable medium, and executed by a processor or processors. The memory may be implemented within the processor or external to the processor.

A general purpose processor may be a microprocessor, but in the alternative, the processor may be any processor, controller, microcontroller, or state machine. A processor may also be implemented as a combination of computing devices, for example, a combination of a digital signal processor (DSP) and a microprocessor, a plurality of microprocessors, one or more microprocessors in conjunction with a DSP core, or any other such configuration. The processors may function in conjunction with servers and network connections as known in the art.

The steps of a method, process, or algorithm described in connection with the present invention may be embodied directly in hardware, in a software module executed by a processor, or in a combination of the two. Additionally, one or more process or method steps may be added to the methods and processes. An additional step, block, or action may be added in the beginning, end, or intervening existing elements of the methods and processes.

The present invention may provide at least the following advantages:
enhanced reliability and sensitivity by measuring vibrations within the cleaner environment of the airline in comparison with the milking line;
greater ease of compliance with hygiene regulations by eliminating interaction with milking line; and
minimised bulk and weight in the undercow milking apparatus by virtue of locating the sensing apparatus away from this point. This also reduces the likelihood of environmental conditions affecting sensor operation.

### BRIEF DESCRIPTION OF THE DRAWINGS

Figure 1 is a diagrammatic view of a milking device according to one embodiment of the present invention;
Figure 2 is a side view of a robot arm for use according to one embodiment of the present invention;
Figures 3a-c illustrate extraction of milk using a milking device according to an embodiment of the present invention;
Figure 4 is a diagram illustrating pressure levels over time in the pulsation space;
Figure 5 is a cross-sectional view of a vibration sensor according to an embodiment of the present invention; and
Figures 6a-c are examples of measurements of a vibrational signal according to an embodiment of the present invention.

### BEST MODES FOR CARRYING OUT THE INVENTION

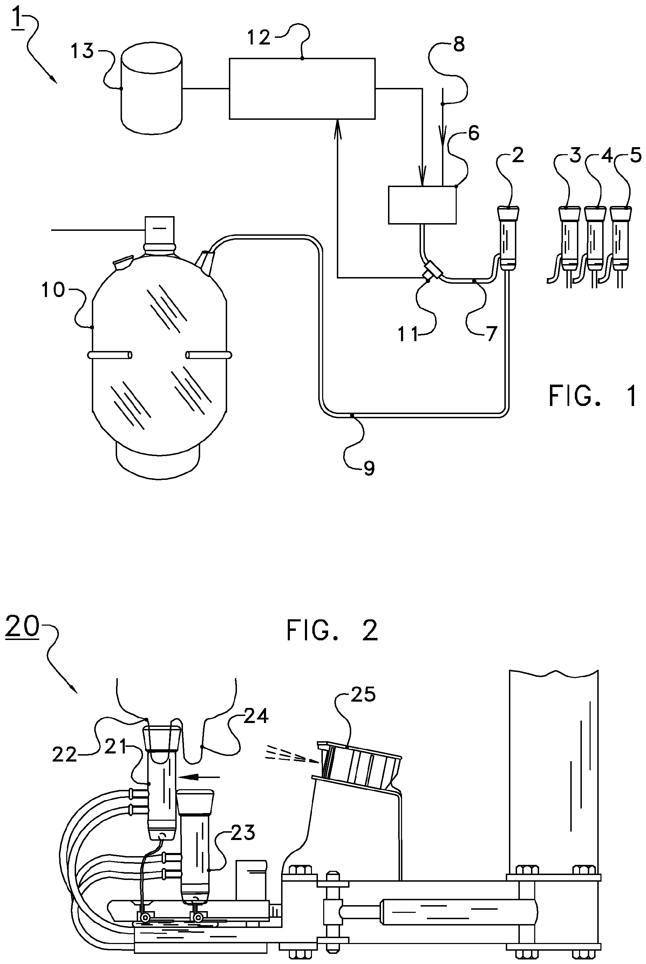

Figure 1 illustrates a milking device (generally indicated by arrow 1) for performing a milking process on a dairy animal (not illustrated). The device 1 includes four teatcups 2,3,4,5, each connected to a pulsator system 6 by way of individual airlines, exemplified by airline 7 which is associated with teatcup 2. The vacuum line 8 for the pulsator system 6 is connected in a usual manner to a vacuum pump with balance tank (not illustrated).

Each teatcup 2, 3, 4, 5 may be automatically connected and disconnected from a teat of a cow by means of a milking robot (as described with reference to Figure 2).

Figure 2 illustrates a robot arm (generally indicated by arrow 20) for connecting a first teatcup 21 to a first teat 22, and a second teatcup 23 to a second teat 24.

A position-determining device 25 detects the positions of the respective teats 22, 24 and teatcups 21, 23, and guides the teatcups 21, 23 to the teats 22, 24 such that vacuum attaches them.

Retuning to Figure 1, it should be appreciated that reference to the robot arm is not intended to be limiting, as it is envisaged that the teatcups may be applied manually.

The milk extracted by each teatcup 2, 3, 4, 5 is supplied via separate milk lines, exemplified by milk line 9 which is associated with teatcup 2, to a milk jar 10 and ultimately a milk tank (not illustrated).

Each teatcup 2, 3, 4, 5 is provided with a vibration sensor, exemplified by vibration sensor 11, within their respective airlines - for example airline 7 of teatcup 2 - configured to measure at least one property of a vibrational signal within the airline.

The value of the measured property is sent from the sensor 11 to a processor 12. The processor 12 is also in communication with the pulsator system 6. It should be appreciated that the signals communicated from the sensor 11 and pulsator system 6 may include data identifying the respective sensor 11, pulsator within the pulsator system 6, and/or the teatcup 2, 3, 4, 5.

Data transmitted to the processor 12 may be stored in memory 13, together with other data used in calculations performed by the processor 12, as described hereinafter.

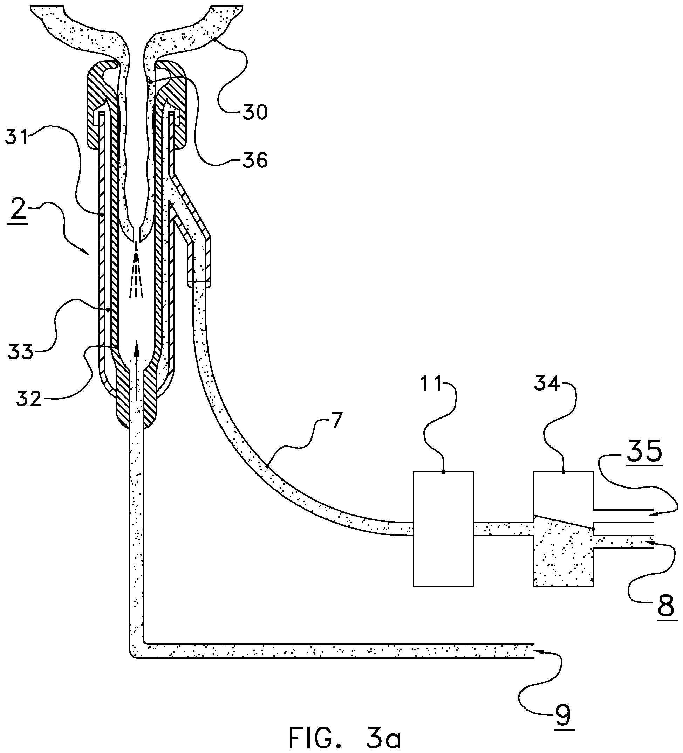

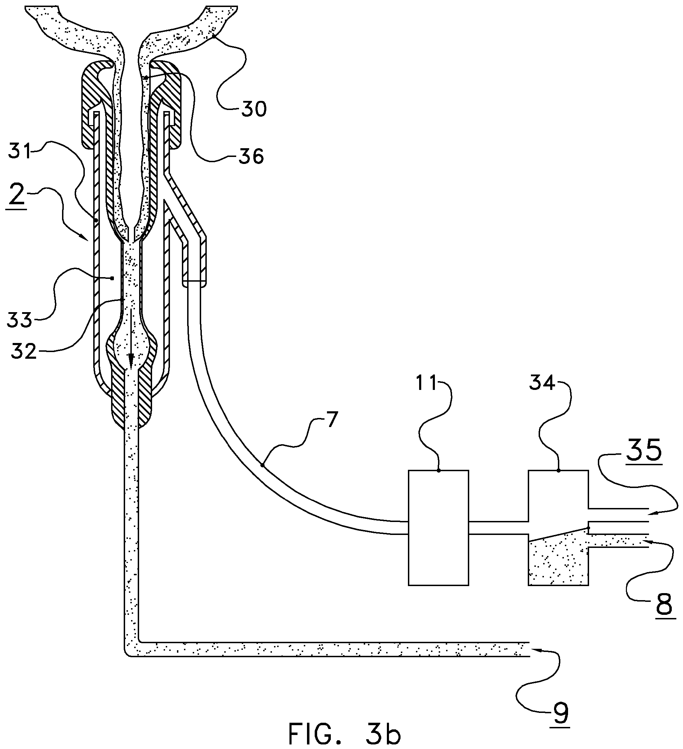

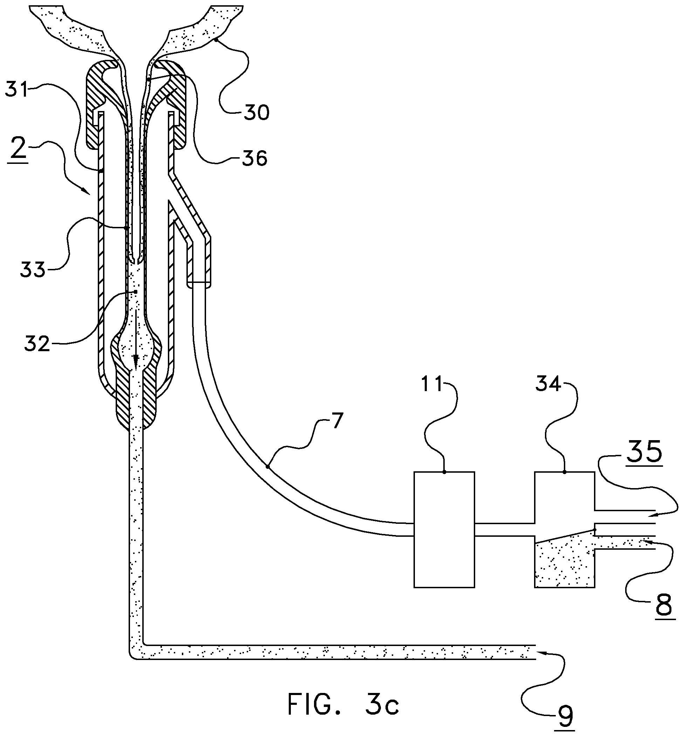

Figures 3a, 3b and 3c illustrate interaction of a dairy animal's udder 30 with a teatcup - for example, teatcup 2.

The teatcup 2 includes a shell 31 and a liner 32, between which a pulsation space 33 is formed. The liner 32 is connected to the milking line 9, while the pulsation space 33 is connected by the airline 7 to a pulsator 34, which forms part of the pulsator system 6 of Figure 1.

The pulsator 34 acts as a valve, controlling connection of the airline 7 to vacuum 9 and atmospheric pressure 35.

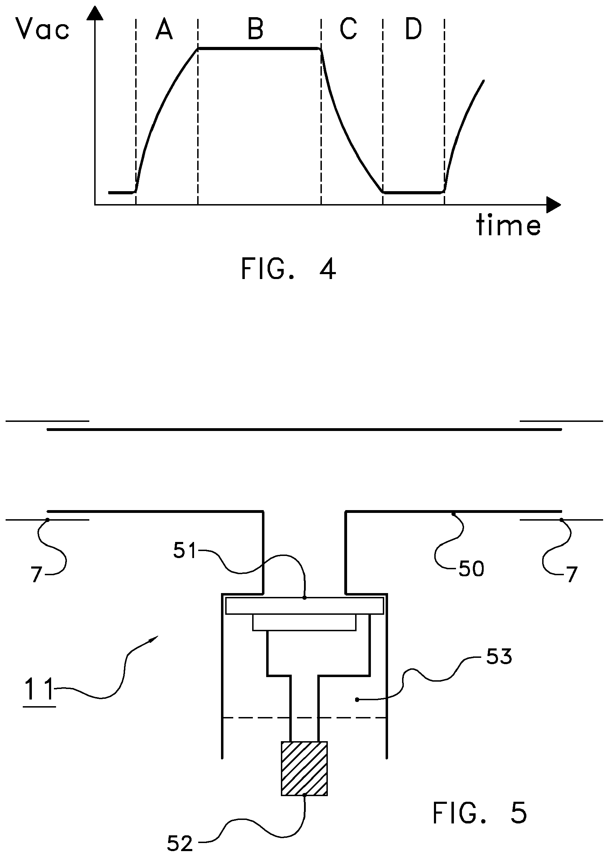

Figure 4 illustrates a typical pulsation cycle, in which the pulsator 34 opens the airline 7 to vacuum 9. The vacuum levels build in phase A to a set vacuum level, which is maintained in phase B. The pulsator 34 then opens the airline 7 to atmospheric pressure 35. Pressure drops during phase C to atmospheric pressure in phase D.

Turning to Figure 3a, during phases A and B the pressure within the milking line 9 and pulsation space 33 is balanced, causing the liner 32 to be drawn away from the teat 36. This allows the vacuum of the milking line 9 to draw milk out of the teat 36.

In Figure 3b, during phases C and D the vacuum of the milking line 9 exceeds the pressure within the pulsation space 33, causing the liner 32 to collapse around the teat 36. This prevents milk from being extracted - providing a rest period for the dairy animal.

As illustrated by Figure 3c, the teatcup 2 may be incorrectly applied to the udder 30- either missing a teat or forming an inefficient connection.

In each case, the vibration sensor 11 is positioned in the airline 7.

Figure 5 illustrates one embodiment of the vibration sensor 11. A body of the sensor 11 is formed by a "T" section of tubing 50 which may be readily inserted into the airline 7.

A piezo element 51 is mounted within the tubing 50, exposed to the airline 7. A co-axial cable 52 connects the piezo element 51 to the processor 12 of Figure 1. Epoxy resin 53 may be used to seal and fix the piezo element 52 in position.

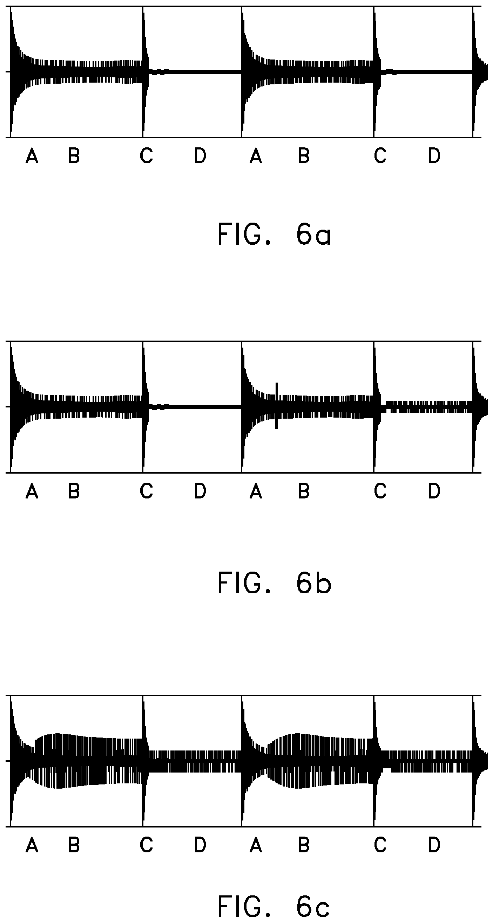

Figures 6a, 6b and 6c illustrate measurements of a vibrational signal made by the vibration sensor 11.

Figure 6a illustrates the amplitude of acoustic signals in the airline 7 under normal milking conditions versus time. The phases of the pulsation cycle illustrated by Figure 4 are marked accordingly.

It may be seen that the amplitude of the signal is greater during the A and B phases than during C and D.

Figure 6b illustrates a scenario in which the teatcup 2 falls off during the second phase A of the series.

In doing so, the milking line 9 is exposed to atmospheric pressure, causing an inrush of air. This is particularly noticeable during phases C and D, when the amplitude of the signal would be expected to drop significantly due to the teatcup liner 32 collapsing about the teat 36 and preventing airflow.

The processor 12 may therefore determine the condition of a teatcup falling off by comparing the amplitude of the signal during at least phase D of the cycle with a reference value. The reference value may be, for example:
a predetermined value stored in the memory 13 connected to the processor 12;
a measured amplitude of the signal during a previous occurrence of the phase, or an average of several measurements.

It should be appreciated that the measurement for comparison with the reference value may be instantaneous amplitude, an average, deviation over a predetermined period, rate of change, or any other quantifiable means by which a comparison may be made with the reference value.

Further, the processor 12 may use measurements from phases other than D - although it is envisaged that phase D will provide the most reliable comparison.

If the processor 12 determines that the teatcup 2 has fallen off, it controls the robot arm 20 to reapply the teatcup 2 to the teat 36.

Figure 6c illustrates a scenario in which the teatcup 2 is incorrectly connected to the teat 36, allowing air to flow past the teat 36 during phases A and B.

This accounts for the large spike in amplitude during phase B in particular, as compared with the normal milking conditions of Figure 6a.

The processor 12 may compare measurements from phase B with reference values to determine whether the teatcup 2 is connected, albeit incorrectly. In doing so, the processor 12 controls the robot arm 20 to adjust the position of the teatcup 2 rather than attempting to relocate the teat 36 again.

It should be appreciated that there are multiple means for determining the phase of the milking process. The large transient signals at the start of phases A and C are due to the switching between vacuum and atmospheric pressure, and this together with amplitude of the acoustic signals in the airline 7 during the following phases may be used to determine phase. Alternatively, the processor 12 may be in communication with the pulsator system 6 and receive signals indicative of same.

In addition to, or in place of, adjusting the position of the teatcups, the processor 12 may be configured to issue an alarm regarding the detected condition. This may be by way of display of text or lights at the milking device or control module thereof, an audible alarm, a flag in software or any other suitable means known to a person skilled in the art.

In manually operated systems, this will enable the timely reapplication of the teatcup 2. In an automatic milking device, recordal of such alarms may allow for identification of ongoing faults requiring either recalibration of equipment, or repair or replacement of faulty components.

Aspects of the present invention have been described by way of example only and it should be appreciated that modifications and additions may be made thereto without departing from the scope thereof as defined in the appended claims.

## Claims

1. A method of monitoring a milking process, the milking process performed by a milking apparatus (1) including at least one teatcup (2, 3, 4, 5) with a pulsation space (33) and at least one pulsation airline (7) configured to deliver varying levels of pressure to the pulsation space,
the method comprising the steps of:
measuring at least one property of a vibrational signal within the airline with a vibration sensor (11);
comparing a value of the measured property with a reference value;
determining a condition of the milking process based on the comparison; and adjusting the positioning of the teatcup in response to the determined condition.

2. A method as claimed in claim 1, wherein determining the condition includes comparing an amplitude of the measured property with the reference value.

3. A method as claimed in claim 1, wherein determining the condition includes comparing deviation of the value of the measured property over time with the reference value.

4. A method as claimed in claim 1, wherein determining the condition includes comparing the rate of change of the measured property over time with the reference value.

5. A method as claimed in any one of claims 1 to 4, wherein the method includes the step of:
determining a phase of one of the milking process or a pulsation phase.

6. A method as claimed in claim 5, wherein the property is measured during at least one selected phase.

7. A method as claimed in claim 6, wherein the property is measured during a phase in which the airline is exposed to atmosphere.

8. A method as claimed in any one of claims 5 to 7, wherein the phase in which the property is measured is used to determine the reference value to be used in the comparison.

9. A method as claimed in any one of claims 5 to 8, wherein the phase is determined by comparing the value of the measured property with a predetermined threshold.

10. A method as claimed in any one of claims 1 to 9, wherein the property of the vibrations is measured using at least one of a piezoelectric transducer (51) and a microphone.

11. A method as claimed in claim 10, wherein the property of the vibrational signal is an average sound pressure level or a peak sound pressure level, in particular as measured during a resting phase and/or a milking phase of a pulsation cycle of the milking process.

12. A method as claimed in any one of claims 1 to 11, wherein the condition is one of the teatcup being disconnected from a teat (36) of the milking animal or the teatcup being incorrectly fitted to a teat of a milking animal.

13. A robotic automatic milking implement configured to perform a milking process, the implement including:
at least one teatcup (2, 3, 4, 5) configured to receive a teat of a milking animal, wherein the teatcup includes a pulsation space (33);
at least one airline (7) configured to deliver varying levels of pressure to the pulsation space of the teatcup;
a robot arm (20) configured to connect the teatcup to the teat; and
a vibration sensor (11;51) configured to measure at least one property of vibrations within the airline; and
at least one processor (12) configured to:
compare a value of the measured property with a reference value;
determine a condition of the milking process based on the comparison; and
adjust the positioning of the teatcup in response to the determined condition.

## Patentansprüche

1. Verfahren zum Überwachen eines Melkprozesses, wobei der Melkprozess durch eine Melkvorrichtung (1) durchgeführt wird, die wenigstens einen Zitzenbecher (2, 3, 4, 5) mit einem Pulsationsraum (33) und wenigstens eine Pulsationsluftleitung (7), die konfiguriert ist, in dem Pulsationsraum unterschiedliche Druckniveaus bereitzustellen, umfasst,
wobei das Verfahren die folgenden Schritte umfasst:
Messen wenigstens einer Eigenschaft eines Schwingungssignals in der Luftleitung mit einem Schwingungssensor (11);
Vergleichen eines Werts der gemessenen Eigenschaft mit einem Bezugswert;
Bestimmen eines Zustands des Melkprozesses auf der Basis des Vergleichs; und
Anpassen der Positionierung des Zitzenbechers in Reaktion auf den bestimmten Zustand.

2. Verfahren nach Anspruch 1, wobei das Bestimmen des Zustands das Vergleichen einer Amplitude der gemessenen Eigenschaft mit dem Bezugswert umfasst.

3. Verfahren nach Anspruch 1, wobei das Bestimmen des Zustands das Vergleichen einer Abweichung des Werts der gemessenen Eigenschaft in Abhängigkeit von der Zeit mit dem Bezugswert umfasst.

4. Verfahren nach Anspruch 1, wobei das Bestimmen des Zustands das Vergleichen der Änderungsrate der gemessenen Eigenschaft in Abhängigkeit von der Zeit mit dem Bezugswert umfasst.

5. Verfahren nach einem der Ansprüche 1 bis 4, wobei das Verfahren den folgenden Schritt umfasst:
Bestimmen einer Phase des Melkprozesses oder einer Pulsationsphase.

6. Verfahren nach Anspruch 5, wobei die Eigenschaft während wenigstens einer ausgewählten Phase gemessen wird.

7. Verfahren nach Anspruch 6, wobei die Eigenschaft während einer Phase gemessen wird, in der die Luftleitung der Atmosphäre ausgesetzt ist.

8. Verfahren nach einem der Ansprüche 5 bis 7, wobei die Phase, in der die Eigenschaft gemessen wird, verwendet wird, um den Bezugswert zu bestimmen, der in dem Vergleich verwendet wird.

9. Verfahren nach einem der Ansprüche 5 bis 8, wobei die Phase durch Vergleichen des Werts der gemessenen Eigenschaft mit einem vorgegebenen Schwellenwert bestimmt wird.

10. Verfahren nach einem der Ansprüche 1 bis 9, wobei die Eigenschaft der Schwingungen unter Verwendung eines piezoelektrischen Signalwandlers (51) und/oder eines Mikrophons gemessen wird.

11. Verfahren nach Anspruch 10, wobei die Eigenschaft des Schwingungssignals ein gemittelter Schalldruckpegel oder ein maximaler Schalldruckpegel ist, der insbesondere während einer Ruhephase und/oder einer Melkphase eines Pulsationszyklus des Melkprozesses gemessen wird.

12. Verfahren nach einem der Ansprüche 1 bis 11, wobei der Zustand darin besteht, dass der Zitzenbecher von einer Zitze (36) des Milchviehs abgenommen ist oder der Zitzenbecher bei einer Zitze eines Milchviehs nicht korrekt angelegt wurde.

13. Automatisches Melkrobotergerät, das konfiguriert ist, einen Melkprozess durchzuführen, wobei das Gerät Folgendes umfasst:
wenigstens einen Zitzenbecher (2, 3, 4, 5), der konfiguriert ist, eine Zitze eines Milchviehs aufzunehmen, wobei der Zitzenbecher einen Pulsationsraum (33) aufweist;
wenigstens eine Luftleitung (7), die konfiguriert ist, in dem Pulsationsraum des Zitzenbechers unterschiedliche Stufen von Druck bereitzustellen;
einen Roboterarm (20), der konfiguriert ist, den Zitzenbecher mit der Zitze zu verbinden; und
einen Schwingungssensor (11; 51), der konfiguriert ist, wenigstens eine Eigenschaft der Schwingungen in der Luftleitung zu messen; und
wenigstens einen Prozessor (12), der konfiguriert ist, die folgenden Schritte auszuführen:
Vergleichen eines Werts der gemessenen Eigenschaft mit einem Bezugswert;
Bestimmen eines Zustands des Melkprozesses auf der Basis des Vergleichs; und
Anpassen der Positionierung des Zitzenbechers in Reaktion auf den bestimmten Zustand.

## Revendications

1. Procédé de surveillance d'un procédé de traite, le procédé de traite effectué par un appareil de traite (1) comportant au moins un gobelet trayeur (2, 3, 4, 5) avec un espace de pulsation (33) et au moins une conduite d'air de pulsation (7) configurée pour délivrer des niveaux variables de pression à l'espace de pulsation,
le procédé comprenant les étapes consistant à :
mesurer au moins une propriété d'un signal vibrationnel à l'intérieur de la conduite d'air avec un capteur de vibrations (11) ;
comparer une valeur de la propriété mesurée avec une valeur de référence ;
déterminer une condition du procédé de traite sur la base de la comparaison ; et
ajuster le positionnement du gobelet trayeur en réponse à la condition déterminée.

2. Procédé selon la revendication 1, dans lequel la détermination de la condition comporte la comparaison d'une amplitude de la propriété mesurée avec la valeur de référence.

3. Procédé selon la revendication 1, dans lequel la détermination de la condition comporte la comparaison d'une dérive de la valeur de la propriété mesurée dans le temps avec la valeur de référence.

4. Procédé selon la revendication 1, dans lequel la détermination de la condition comporte la comparaison de la vitesse de variation de la propriété mesurée dans le temps avec la valeur de référence.

5. Procédé selon l'une quelconque des revendications 1 à 4, le procédé comportant l'étape consistant à :
déterminer une phase du procédé de traite ou une phase de pulsation.

6. Procédé selon la revendication 5, dans lequel la propriété est mesurée pendant au moins une phase sélectionnée.

7. Procédé selon la revendication 6, dans lequel la propriété est mesurée pendant une phase dans laquelle la conduite d'air est exposée à l'atmosphère.

8. Procédé selon l'une quelconque des revendications 5 à 7, dans lequel la phase dans laquelle la propriété est mesurée est utilisée pour déterminer la valeur de référence à utiliser dans la comparaison.

9. Procédé selon l'une quelconque des revendications 5 à 8, dans lequel la phase est déterminée en comparant la valeur de la propriété mesurée avec un seuil prédéterminé.

10. Procédé selon l'une quelconque des revendications 1 à 9, dans lequel la propriété des vibrations est mesurée en utilisant un transducteur piézoélectrique (51) et/ou un microphone.

11. Procédé selon la revendication 10, dans lequel la propriété du signal vibrationnel est un niveau moyen de pression acoustique ou un niveau maximal de pression acoustique, en particulier tel que mesuré pendant une phase de repos et/ou une phase de traite d'un cycle de pulsation du procédé de traite.

12. Procédé selon l'une quelconque des revendications 1 à 11, dans lequel la condition est le gobelet trayeur débranché d'un trayon (36) de l'animal laitier ou le gobelet trayeur mal installé sur un trayon d'un animal laitier.

13. Dispositif de traite automatique robotisée configuré pour effectuer un procédé de traite, le dispositif comportant :
au moins un gobelet trayeur (2, 3, 4, 5) configuré pour recevoir un trayon d'un animal laitier, le gobelet trayeur comportant un espace de pulsation (33) ;
au moins une conduite d'air (7) configurée pour délivrer des niveaux variables de pression à l'espace de pulsation du gobelet trayeur ;
un bras robotisé (20) configuré pour raccorder le gobelet trayeur au trayon ; et
un capteur de vibrations (11 ; 51) configuré pour mesurer au moins une propriété de vibrations à l'intérieur de la conduite d'air ; et
au moins un processeur (12) configuré pour :
comparer une valeur de la propriété mesurée avec une valeur de référence ;
déterminer une condition du procédé de traite sur la base de la comparaison ; et
ajuster le positionnement du gobelet trayeur en réponse à la condition déterminée.
